# EUROPÄISCHE PATENTSCHRIFT

(11) **EP 1 205 115 B1**
(45) Veröffentlichungstag und Bekanntmachung des Hinweises auf die Patenterteilung: **13.10.2004**
(21) Anmeldenummer: 01125441.4
(22) Anmeldetag: 02.11.2001
(51) Int. Cl.: A23K 1/16, A23K 3/00, A23K 1/18

(54) **Einsatz eines Säurepräparates als Futtermittelzusatz in der Nutztieraufzucht**
Use of an acid preparation as a feed additive in the raising of livestock
Usage d'une préparation acide comme additif alimentaire dans l'élevage d'animaux de ferme

(30) Priorität: 09.11.2000 DE 10055390
(43) Veröffentlichungstag der Anmeldung: 15.05.2002
(73) Patentinhaber: Nutrinova Nutrition Specialties & Food Ingredients GmbH, 65929 Frankfurt am Main (DE)
(72) Erfinder: Raczek, Nico N., Dr., 65779 Kelkheim (DE); Mollenkopf, Christoph, Dr., 65929 Frankfurt am Main (DE)
(74) Vertreter: Schweitzer, Klaus, Dr.

(56) Entgegenhaltungen:
- EP-A- 0 071 331
- WO-A-92/03938
- WO-A-98/20749
- DE-A- 19 710 127
- ROTH F X ET AL: "ORGANIC ACIDS AS FEED ADDITIVES FOR YOUNG PIGS: NUTRITIONAL AND GASTROINTESTINAL EFFECTS" JOURNAL OF ANIMAL AND FEED SCIENCES, POLSKA AKADEMIA NAUK, PL, Bd. 7, 1998, Seiten 25-33, XP000856184 ISSN: 1230-1388

## Beschreibung

Die Erfindung betrifft ein testes Präparat als Tierfutter- oder Futtermittelzusatz welches Sorbinsäure und andere Säuren enthält und allein in Futtermitteln oder in Abmischung mit anderen Futtermittelzusatzstoffen in der Nutztieraufzucht angewendet werden kann.

Im Bereich der Tierfutter werden häufig Antibiotika als Leistungsförderer verwendet. Die Anwendung von Antibiotika in diesem Bereich steht im Verdacht für Gefahren, welche von resistenten Bakterien ausgehen, die auch die menschliche Gesundheit langfristig gefährden können, verantwortlich zu sein. Daher müssen gesundheitlich weniger bedenkliche Produkte für diesen Einsatzzweck gesucht werden. So werden auch in anderen Bereichen zunehmend physiologisch und epidemiologisch gesundheitlich bedenkliche oder aber für die Umwelt schädliche Substanzen, wie beispielsweise Antibiotika, formaldehydabspaltende Stoffe, halogenierte Substanzen, u.v.a.m. beispielsweise in Lebensmitteln, Futtermitteln, Haustierfutter, Silagen, Trester, oder anderen Abfällen aus der Lebensmittelindustrie, durch weniger bedenkliche Stoffe ersetzt. Der Zweck dieser Stoffe ist zum einen auf die Werterhaltung des eigentlichen Produktes gerichtet. Zum anderen aber soll auch deren hygienischer Zustand verbessert werden, bzw. eine verlängerte Haltbarkeit erzielt werden.

Es ist bekannt, dass Sorbinsäure zur Konservierung von Futtermitteln eingesetzt werden kann. Sorbinsäure (trans,trans-2,4-Hexadiensäure) ist eine farblose, feste Verbindung, die sich nur wenig in kaltem Wasser löst und weltweit als Konservierungsstoff verwendet wird. Das Wirkprinzip wird durch die Sorbinsäure in undissoziierter Form bestimmt. Die beste Wirkung entfaltet Sorbinsäure daher im sauren pH-Bereich. Sorbinsäure und seine Salze besitzen eine sehr gute mikrobiostatische, antimykotische Wirkung. Gleichzeitig ist Sorbinsäure als ungesättigte Fettsäure praktisch ungiftig, was sehr umfangreiche Daten belegen, und durch die jahrzehntelange Anwendung dieser Säure im Lebensmittelbereich, in Tierfuttern u.a. belegt ist.

In der DE-A-19710127 ist ein Mittel zur Keimverminderung in Trinkwasser, Tränkewasser und Waschwasser für Gemüse beschrieben. Das Mittel besteht aus Komponenten, die als Zusatzstoffe für Lebensmittel oder Futtermittel zugelassen sind. Unter anderem enthält das Mittel Sorbinsäure, Essigsäure und Apfelsäure, d. h. neben Sorbinsäure eine weitere feste und eine flüssige Säure. Das Mittel selbst ist flüssig. Die Sorbinsäure wird dabei in einer organischen Säure gelöst und liegt in Anteilen von 3 bis 10 % Sorbinsäure in dem Lösemittel vor.

Die WO-A-9820749 beschreibt flüssige Futtermittelzusätze, die eine flüssige, eine feste Säure und Sorbinsäure enthalten können. Der Gewichtsanteil der Sorbinsäure an dem flüssigen Futtermittelzusatz liegt im Bereich von 0,1 bis 5 %.

In der EP-A-00771331 sind Präparate zur Herstellung eines weichen, feuchten Tierfutters offenbart. Bei der Herstellung der Präparate werden zunächst die festen Bestandteile miteinander vermischt und anschließend die flüssigen Bestandteile hinzugegeben, so dass ein feuchtes weiches Produkt entsteht. Der Sorbinsäuregehalt in diesem Tierfutter liegt unterhalb von 1 Gew.-%. Sorbinsäure als Antimykotikum verhindert in dem Tierfutter das Pilzwachstum. Es ist nicht beabsichtigt möglichst hohe Sorbinsäuremengen dem Tierfutter hinzuzufügen, ebenso wenig ist eine Leistungsförderung bei der Gewichtszunahme der Tiere durch solche Säuren beabsichtigt.

In der WO-A-9203938 ist ein Verfahren zur Verlängerung der Haltbarkeit von proteinhaltigen Produkten beschrieben. Die Lagerstabilität dieser Produkte, insbesondere von Fleischprodukten, wird durch eine Säure/Hitzebehandlung mit polymeren Säuren erreicht. Zusätzlich können weitere Säuren wie Salzsäure, Schwefelsäure, Phosphorsäure, Maleinsäure, Milchsäure, Citronensäure, Weinsäure, Adipinsäure, Sorbinsäure, Bernsteinsäure und weitere Säuren eingesetzt werden. Der Anteil von Sorbinsäure liegt unter 1 Gew.%.

Die Literaturstelle "Journal of Animal and Feed Sciences", 7, 1998, Seiten 25 bis 33 (Verfasser: F. X. Roth und M. Kirchgässner) beschäftigt sich mit der nutritiven Leistungssteigerung in der Schweinezucht durch Zusatz von organischen Säuren, u.a. Sorbinsäure, zu dem Tierfutter. Der Anteil an Sorbinsäure liegt in der Größenordnung von 2,4 Ges.-%. Es finden sich keine Hinweise auf die Problematik, die mit Präparaten, die extrem hohe Säuregehalte haben, einhergehen. Zu der Problematik hoher Säuregehalte gehört schlechte Mischbarkeit, Feuchtigkeit, schlechte Löslichkeit und eventuelle Unverträglichkeit der Säuren. Neben Sorbinsäure werden auch andere organische Säuren seit Jahren zur Konservierung von Futtermitteln und zur Verbesserung der Futterhygiene eingesetzt. Gerade im Futter für Jungtiere sind an die hygienische Qualität besondere Anforderungen zu stellen. Daher sind einige organischen Säuren als Futterzusatzstoffe, basierend auf den nationalen futtermittelrechtlichen Bestimmungen ohne Höchstmengenbegrenzung zugelassen.

Es wurden früher Fütterungsversuche vor allem mit Ferkeln durchgeführt, die belegten, daß verschiedene organische Säuren, wie Zitronensäure, Fumarsäure oder Ameisensäure in der Lage sind, die tierischen Leistungen in positiver Weise zu beeinflussen, wenn sie in der optimalen Dosierung dem Ferkelfutter beigemischt werden (Kirchgeßner und Roth 1991; Roth und Kirchgeßner 1998). In jüngster Zeit konnte auch gezeigt werden, daß die Sorbinsäure in hohen Konzentrationen (1,8 - 2,4 % Sorbinsäure, bezogen auf das Futtermittel) eine nutritive Wirksamkeit für Aufzuchtferkel besitzt (Kirchgeßner et al. 1995).

Vermehrt werden in der Tierernährung einzelne organische Säuren eingesetzt. Häufig nachteilig wirkt sich der flüssige Aggregatzustand, die Flüchtigkeit einiger Säuren oder aber eine schlechte Löslichkeit auch ihrer Natrium-, Kalium-, Calcium- oder Magnesiumsalze aus. Oft ist eine schlechte Mischbarkeit oder eine Unverträglichkeit dieser Säuren festzustellen. So zeigen beispielsweise Mischungen von Ameisensäure und Benzoesäure eine schnelle Braunverfärbung, welche möglicherweise auf Oxidationsreaktionen zurückzuführen ist.

Es ist bekannt, dass Futtermittel eine hohe Pufferkapazität besitzen. Um diese Pufferkapazität des Futters zu überwinden, können Säuren dem Futter beigemischt werden. Weiterhin ergibt sich durch die Abhängigkeit vom pH-Wert die Notwendigkeit, bei Futtermitteln mit hoher Pufferkapazität hohe Konzentrationen einiger Säuren einzusetzen die sich, beispielsweise bei der Anwendung von Propionsäure, sehr schnell sensorisch nachteilig bemerkbar machen können. Eine Lösung für dieses Problem beschreibt die DE-A 197 39 319. Dort werden mit flüssigen Carbonsäuren getränkte Salze beschrieben, insbesondere Kombinationen von Konservierungstoffsäuren mit entsprechenden Salzen. Bei den in der DE-A 197 39 319 beschriebenen getränkten Salzen kann jedoch die erforderliche pH-Wert-Absenkung nicht erreicht werden, da die bereits enthaltenen Salze den pH-Wert abpuffern (siehe Beispiel 15 in DE-A 197 39 319: getränktes Salz aus Natriumformiat und Ameisensäure: von pH 6,4 auf 5,5 bzw. 5,1, bei 10 bzw. 20 kg/t Futter). Außerdem ist bei den in der DE-A 197 39 319 beschriebenen getränkten Salzen mit einer schnellen Verfärbung bzw. mit einer Verflüssigung zu rechnen. Diese Veränderungen sind ohne ausreichend große Träger-/Stabilisatormengen bereits nach kurzer Zeit feststellbar, so daß hier kein praktisch nutzbares Produkt gewonnen werden kann. Darüber hinaus wird nur ein Wirkstoffgehalt bis zu etwa 75 Gew.-% (berechnet als Gesamtsäure) erreicht.

Insgesamt nachteilig an solchen bisher bekannten Futtermittelzusätzen, getränkten Salzen bzw. den damit hergestellten Futtermitteln war, dass sie relativ instabil sind und bereits nach relativ kurzer Lagerzeit zerfließen, verbacken oder Braunverfärbungen zeigen. Außerdem tragen sie nicht zu einer effektiven Säuerung des Futters bei, und es kann nur wenig Säure pro Gewichtseinheit des Zusatzes zugegeben werden. Aufgabe der Erfindung ist es, feste Präparate mit hohem Säuregehalt als Tierfutteroder Futtermittelzusatz zur Verfügung zu stellen, die leistungsfördernde Wirkung bei der Gewichtszunahme von Tieren haben und über längere Zeit lagerungsfähig sind.

Gelöst wird diese Aufgabe durch ein Präparat welches 25 bis 45 Gew.-% Sorbinsäure (bezogen auf das Präparat), mindestens eine bei Raumtemperatur (= 23°C) flüssige Säure und mindestens eine weitere bei Raumtemperatur feste, von Sorbinsäure verschiedene organische Säure enthält.

Bevorzugt ist ein Präparat, welches zusätzlich zu den genannten Inhaltsstoffen einen Träger enthält.

Überraschenderweise zeigen die erfindungsgemäßen Präparate die oben beschriebenen Nachteile nicht. Die Präparate zeigen vielmehr eine hohe Stabilität, verbunden mit guten Eigenschaften in der Handhabung. Außerdem wird eine effektive Säuerung des Futters erreicht. Zudem kann überraschenderweise auch ein positiver Einfluss auf die Wachstumsleistung von jungen Tieren schon mit relativ geringen Säuremengen festgestellt werden.

Die im Folgenden angegebenen Gewichtsprozente beziehen sich auf das Gesamtgewicht des Präparates.

Bei den flüssigen Säuren handelt es sich um bei Raumtemperatur (= 23°C) flüssige organische Säuren. Bei den festen Säuren handelt es sich um bei Raumtemperatur (= 23°C) feste, von Sorbinsäure verschiedene organische Säuren. Zu den erfindungsgemäß einsetzbaren organischen Säuren zählen beispielsweise Ameisen-, Essig-, Propion-, Butter-, Valerian-, Isobutter-, Trimethylessig-, Isovalerian-, 2-Methylbutter-, Hexan-, Bernstein-, Adipin-, Fumar-, Äpfel-, Wein-, Citronen-, Milch-, Ascorbin-, Glucon- und Aminosäuren, insbesondere essentielle Aminosäuren. Als flüssige Säuren können aber auch anorganische Säuren wie Phosphor-, Salz- oder Schwefelsäure verwendet werden. Vorzugsweise wird Phosphor-, Propion-, Essig-, Milch-, Valerian-, Ameisen-, Isobutter-, Trimethylessig-, 2-Methylbutter-, Hexan- oder Buttersäure verwendet. Bei den festen Säuren werden bevorzugt Fumar-, Wein- oder Äpfelsäure, insbesondere Citronensäure eingesetzt.

Das Präparat enthält erfingdungsgemäß mindestens 80 Gew.-%, Säuren. In weiterer Ausgestaltung der Erfindung enthält das Präparat 30 bis 40 Gew.-% Sorbinsäure. Des Weiteren enthält es > 0 bis 40 Ges.-% flüssige Säuren. Außerdem enthält das Präparat feste organische Säuren zwischen > 0 und 50 Gew.-%.

Als Träger können organische oder anorganische, säurebeständige Materialien mit poröser Struktur verwendet werden. Dazu zählen beispielsweise Diatomeenerden, Ton, Sand, Nylonpulver, Getreidekleie, unlösliche Metalloxide, unlösliche Metallsalze, Aerosil, Korund, gemahlenes Glas, Granit, Quarz, Flint, Aluminiumphosphat, Kaolin, Bentonit, Zeolithe, Calciumsilikat, Talkum, Titanoxide, Aktivkohle, Knochenmehle und insbesondere synthetische oder natürliche amorphe Fällungskieselsäuren, Magnesiumsilikate oder Natrium-Aluminiumsilikate. Überraschenderweise hat sich gezeigt, das beim Einsatz eines bestimmten Natrium-Aluminiumsilikates, nämlich Perlit (Perlstein, E 599), beispielsweise als Perligran A, M, F, E/L, 0, 0/1 oder Perligran Pulver 1, Superlite Pulver 1 (Deutschen Perlite GmbH, Dortmund), das Präparat besonders gute Eigenschaften aufweist. Bei der Verwendung von Perlit als Träger wird im erfindungsgemäßen Präparat eine hohe Farbstabilität und ein schüttfähiges und leicht handhabbares Produkt erhalten. Obwohl beispielsweise auch Bentonit und Kieselsäuren als Träger geeignet sind, zeigt sich bei diesen Trägern beim Einsatz von hohen Anteilen an flüssiger organischer Säure nach einigen Wochen Lagerzeit ein Verbacken der Präparate. Bei ungünstigen Lagerbedingungen ist zudem auch ein Zerfließen der Präparate bzw. eine starke Braunverfärbung festzustellen.

Als Träger und zur Stabilisierung der Präparate werden >0 bis 20 Gew.%, bevorzugt 5 - 15 Gew.-% und besonders bevorzugt 7 - 10 Gew.-% o.g. Trägermaterialien allein oder in Kombination eingesetzt.

Das erfindungsgemäße Präparat wird hergestellt, indem man beispielsweise bei gleichzeitiger mechanischer Durchmischung die flüssige(n) Säure(n) zu den festen Säuren tropft. Enthält das erfindungsgemäße Präparat einen Träger, so wird (werden) zweckmäßigerweise in einem handelsüblichen Taumel- oder anderen üblichen Mischer zunächst die flüssige(n) Säure(n) auf den Träger aufgebracht und anschließend die Sorbinsäure und die andere(n) feste(n) organische(n) Säure(n) zugegeben.
Als Tierfuttermittel geeignet sind z. B. Grünfutter, Silagen, Trockengrünfutter, Wurzeln, Knollen, fleischige Früchte, Körner und Samen, Biertreber, Trester, Bierhefe, Destillationsschlempe, Müllereinebenerzeugnisse, Nebenerzeugnisse der Zucker-, Stärkeherstellung und Ölgewinnung und verschiedene Lebensmittelabfälle. Solchen Futtermitteln können bestimmte Futtermittelzusatzstoffe (z.B. Antioxidantien) oder Mischungen aus verschiedenen Substanzen (z.B. Mineralstoffmischungen, Vitaminmischungen) zu Verbesserung beigegeben werden. Spezielle Futtermittel werden auch für bestimmte Tierarten und deren Entwicklungsstadium angepaßt. Dies ist beispielsweise in der Ferkelaufzucht der Fall. Hier werden Saugferkelfutter und Ferkelaufzuchtfutter verwendet. Das erfindungsgemäße Präparat kann direkt dem Tierfuttermittel bzw. auch in Abmischung mit anderen Futtermittelzusatzstoffe oder aber über Vormischungen dem eigentlichen Futtermittel zugegeben werden. Das Präparat kann trocken dem Futter zugemischt werden, vor einer weiteren Verarbeitung (z.B. Extrusion) zugegeben werden bzw. im Gemisch dispergiert zudosiert werden. Für diese Zwecke werden zweckmäßigerweise Präparat-Konzentrationen zwischen 0,125 und 7,5 Gew.-% (bezogen auf das Futter), bevorzugt 1,5 - 4,5 Gew.-% angewendet.

Das Präparat kann als alleiniger Zusatzstoff zu Tierfuttermitteln beispielsweise für die Kälber- oder Lämmeraufzucht, besonders bevorzugt zu Saugferkelfutter (Prestarter) und Ferkelaufzuchtfutter (Starterfutter) zugegeben werden oder in Abmischung mit anderen Futtermittelzusatzstoffen für diese Tiere angewendet werden.

Überraschenderweise wurde gefunden, daß schon durch Zusatz geringer Mengen erfindungsgemäßer Präparate in der Ferkelaufzucht eine deutliche Leistungsverbesserungen hinsichtlich Zuwachsrate und Futterverwertung erreicht werden kann. Zur Sicherung einer signifikanten nutritiven Wirksamkeit ist ein Zusatz an erfindungsgemäßen Präparaten in Mengen von 1,0 bis 7,5 Gew.-%, bezogen auf das Futter, vorzugsweise von 1,5 - 4,5 Gew.--%, zweckmäßig.

Gleichermaßen eignen sich die erfindungsgemäßen Präparate in der Kälberaufzucht als Zusatz zu Milchaustauscherfutter, insbesondere in Konzentrationen zwischen 0,125 und 5 Gew.--%, vorzugsweise zwischen 0,2 und 3 Gew.--%, bezogen auf das Gesamtfutter.

Weiterhin eignen sich die erfindungsgemäßen Präparate in der Schafaufzucht als Milchaustauscherzusatz bei der Frühentwöhnung von Sauglämmern oder bei der mutterlosen Aufzucht insbesondere in Konzentrationen zwischen 0,125 und 5 Gew.-%, vorzugsweise zwischen 0,2 und 3 Gew.--%, bezogen auf das Gesamtfutter.

Die erfindungsgemäßen Präparate liegen in einem festen Agregatzustand vor. Durch die vorliegende Erfindung werden sowohl die sonst problematische Handhabbarkeit flüssiger Säuren, als auch eine Entmischung bzw. ein Zerfließen nach einer gewissen Lagerzeit der Mischungsprodukte bzw. getränkter Salze gelöst. Das Präparat erweist sich zudem als besonders farbstabil und zeigt keine Braunverfärbungen, wie die Mischungen der Salze gemäß DE-A 197 39 319.

Weiterhin ist das erfindungsgemäße Präparat in der Lage den pH-Wert von Futtermitteln unerwartet stark zu senken, was sich auf den hygienischen Status des Futters auswirkt, wodurch eine verbesserte Haltbarkeit mikrobiologisch anfälliger Futtermittel erzielt wird. Die Pufferkapazität des Futtermittels wird durch den Einsatz der erfindungsgemäßen Präparate wesentlich besser überwunden als beispielsweise durch den Einsatz der getränkten Salze nach DE-A 197 39 319, teilweise auch besser als durch den Einsatz einer Carbonsäure allein.

Die Erfindung wird nachfolgend anhand von Beispielen erläutert.

### Beispiel 1

In 10 g Perligran 0 (Deutschen Perlite GmbH, Dortmund) werden 30 g Propionsäure bei gleichzeitiger mechanischer Durchmischung eingetropft. Anschließend werden je 30 g Citronensäure und Sorbinsäure dazugegeben und gut durchmischt.

### Beispiel 2

In 10 g Perligran 0 werden 30 g Ameisensäure bei gleichzeitiger mechanischer Durchmischung eingetropft. Anschließend werden je 30 g Citronensäure und Sorbinsäure dazugegeben und gut durchmischt.

### Beispiel 3

In 10 g Perligran 0 werden 30 g Milchsäure (80 %ig) bei gleichzeitiger mechanischer Durchmischung eingetropft. Anschließend werden je 24 g Citronensäure und Sorbinsäure dazugegeben und gut durchmischt.

### Beispiel 4

In 10 g Perligran 0 werden 30 g Essigsäure bei gleichzeitiger mechanischer Durchmischung eingetropft. Anschließend werden je 30 g Citronensäure und Sorbinsäure dazugegeben und gut durchmischt.

### Beispiel 5

In 10 g Perligran 0/1 (Deutschen Perlite GmbH, Dortmund) werden 30 g Propionsäure bei gleichzeitiger mechanischer Durchmischung eingetropft. Anschließend werden je 30 g Citronensäure und Sorbinsäure dazugegeben und gut durchmischt.

### Beispiel 6

In 10 g Perligran 0 werden 30 g Valeriansäure bei gleichzeitiger mechanischer Durchmischung eingetropft. Anschließend werden je 30 g Citronensäure und Sorbinsäure dazugegeben und gut durchmischt.

### Beispiel 7

In 10 g Perligran 0/1 werden 40 g Propionsäure bei gleichzeitiger mechanischer Durchmischung eingetropft. Anschließend werden je 40 g Citronensäure und Sorbinsäure dazugegeben und gut durchmischt.

### Beispiel 8

In 10 g Perligran 0 werden 30 g Phosphorsäure (85%ig) bei gleichzeitiger mechanischer Durchmischung eingetropft. Anschließend werden je 30 g Citronensäure und Sorbinsäure dazugegeben und gut durchmischt.

### Beispiel 9

In 10 g Perligran 0/1 werden 40 g Phosphorsäure (85%ig) bei gleichzeitiger mechanischer Durchmischung eingetropft. Anschließend werden je 40 g Citronensäure und Sorbinsäure dazugegeben und gut durchmischt.

### Beispiel 10

In 10 g Perligran 0/1 werden 40 g Ameisensäure bei gleichzeitiger mechanischer Durchmischung eingetropft. Anschließend werden je 40 g Citronensäure und Sorbinsäure dazugegeben und gut durchmischt.

### Beispiel 11

In 1,350 kg Perligran 0/1 werden 3,90 kg Ameisensäure bei gleichzeitiger mechanischer Durchmischung eingetropft. Anschließend werden je 4,50 kg Citronensäure und 5,25 kg Sorbinsäure dazugegeben und gut durchmischt.

### Beispiel 12

In 1,350 kg Perligran 0/1 werden 3,90 kg Propionsäure bei gleichzeitiger mechanischer Durchmischung eingetropft. Anschließend werden je 4,50 kg Citronensäure und 5,25 kg Sorbinsäure dazugegeben und gut durchmischt.

### Beispiel 13

In 1,350 kg Perligran 0/1 werden 4,70 kg Milchsäure (80 %ig) bei gleichzeitiger mechanischer Durchmischung eingetropft. Anschließend werden je 4,50 kg Citronensäure und 5,275 kg Sorbinsäure dazugegeben und gut durchmischt.

Getränkte Salze gemäß DE-A 197 39 319
Die unten in der Tabelle aufgeführten getränkten Salze wurden in Analogie zu DE-A 197 39 319 hergestellt. Sie wurden ohne Zusatz anderer Stoffe unter den unten in der Tabelle angegebenen Bedingungen gelagert und in regelmäßigen Abständen visuell auf Verfärbungen geprüft:

| Art des Salzes | Zeit nach Gelbbraunverfärbung des Pulvers, verschlossen, - Dunkel bei 25 °C/7 °C Unter Sonnenlicht bei 25 °C/7 °C | Zeit nach Gelbbraunverfärbung einer 1 %igen wässrigen Lösung, verschlossen, - Dunkel bei 25 °C/7 °C - Unter Sonnenlicht bei 25 °C/7 °C |
|---|---|---|
| Getränktes Salz aus Sorbat und Essigsäure (12 g Essigsäure, 75 g Ca-sorbat) | 2 Monate / 2 Monate 4-5 Wochen / 2 Monate | 3-4 Wochen / - 3-4 Wochen / - |
| Getränktes Salz aus Benzoat und Propionsäure (100 g Na-benzoat, 15 g Propionsäure) | 5 Wochen / 7 Wochen 6 Wochen / 7 Wochen | 6 Wochen / 8 Wochen 7 Wochen / 7 Wochen |
| Getränktes Salz aus Sorbat und Propionsäure (54 g Ca-sorbat, 8 g Propionsäure) | 1-2 Wochen / 4-5 Wochen 1-2 Wochen / 3-4 Wochen | 2-3 Wochen / 4-5 Wochen 3-4 Wochen / 4-5 Wochen |
| Getränktes Salz aus Ameisensäure und Sorbat (100 g Ca-sorbat, 15 g Ameisensäure) | 4-5 Wochen / 2 Monate 4-5 Wochen / 2 Monate | 3-4 Wochen / 3-4 Wochen 4-5 Wochen / - |

Die oben angeführten getränkten Salze waren ohne Zusatz von Stabilisatoren in allen Fällen unter den o.g. Bedingungen i.a. spätestens nach 2 Monaten deutlich verfärbt. Dagegen sind die Präparate aus den Beispielen 1 bis 10 über 6 Monate unter Sonnenlicht bei 25 °C lagerstabil und zeigen keine Braunverfärbung oder eine sonstige Änderung in einer ihrer Eigenschaften.

Vorteilhafterweise übersteigt der Gehalt an Säuren in den erfindungsgemäßen Präparaten in jedem Fall 80 Gew.-%, da zur Stabilisierung nur bis zu 20 Gew.-% Träger notwendig sind. In den getränkten Salzen sind solche Gehalte nicht zu erreichen.

### Reduzierung des pH-Wertes in einem Modellfutter

Die folgenden Beispiele zeigen die erfindungsgemäßen Präparate im Vergleich zu reinen Carbonsäuren und den getränkten Salzen gemäß DE-A 197 39 319.

Es wurden 50 g Hartweizengrieß in 150 ml Trinkwasser 10 Minuten lang gerührt. Anschließend wurde das zu prüfende Präparat hinzugefügt und nach weiteren 5 Minuten Rühren der pH-Wert gemessen. Im einzelnen wurde der pH-Wert nach Zugabe von:
0 g;
0,5 g;
1,0 g;
1,5 g;
2,0 g und
2,5 g
des zu prüfenden Präparates eingesetzt. Folgende Tabellen zeigen die erhaltenen pH-Wert Differenzen zwischen Modellfuttermitel ohne und mit Zusatz des entsprechenden Präparates.

| Getränkte Salze | 0 g | 0,5 g | 1,0 g | 1,5 g | 2,0 g | 2,5g |
|---|---|---|---|---|---|---|
| | ΔpH | | | | | |
| DE-A 197 39 319, Bsp. 2 100g Ca-formiat + 15g Ameisensäure | 0,0 | -0,5 | -0,9 | -1,1 | -1,3 | -1,4 |
| DE-A 197 39 319, Bsp. 6 100g Ca-formiat + 15g Propionsäure | 0,0 | -0,6 | -1,3 | -1,4 | -1,5 | -1,5 |
| 100g Ca-formiat + 15g Essigsäure | 0,0 | -0,6 | -1,1 | -1,4 | -1,5 | -1,5 |
| DE-A 197 39 319, Bsp. 7 100g Ca-propionat + 15g Propionsäure | 0,0 | -0,6 | -0,7 | -0,8 | -0,8 | -0,8 |
| 100g Ca-sorbat + 15g Ameisensäure | 0,0 | -0,7 | -0,9 | -1,1 | -1,1 | -1,2 |

| Säure | 0 g | 0,5 g | 1,0 g | 1,5 g | 2,0 g | 2,5 g |
|---|---|---|---|---|---|---|
| | ΔpH | | | | | |
| Fumarsäure | 0,0 | -2,9 | -3,3 | -3,4 | -3,5 | -3,6 |
| Citronensäure | 0,0 | -2,6 | -3,1 | -3,4 | -3,5 | -3,6 |
| Essigsäure | 0,0 | -2,3 | -2,5 | -2,7 | -2,8 | -2,9 |
| Propionsäure | 0,0 | -2,1 | -2,3 | -2,5 | -2,6 | -2,7 |

| Erfindungsgemäße Präparate nach | 0 g | 0,5 g | 1,0 g | 1,5 g | 2,0 g | 2,5 g |
|---|---|---|---|---|---|---|
| | ΔpH | | | | | |
| Beispiel 1 | 0,0 | -2,1 | -2,5 | -2,8 | -3,0 | -3,2 |
| Beispiel 2 | 0,0 | -2,2 | -3,0 | -3,3 | -3,4 | -3,6 |
| Beispiel 3 | 0,0 | -2,2 | -2,7 | -3,1 | -3,3 | -3,5 |
| Beispiel 4 | 0,0 | -2,1 | -2,6 | -2,8 | -3,1 | -3,2 |
| Beispiel 5 | 0,0 | -1,9 | -2,5 | -2,8 | -3,0 | -3,2 |
| Beispiel 6 | 0,0 | -2,0 | -2,5 | -2,8 | -3,0 | -3,1 |
| Beispiel 7 | 0,0 | -2,0 | -2,5 | -2,8 | -3,0 | -3,1 |
| Beispiel 8 | 0,0 | -2,1 | -2,6 | -3,2 | -3,4 | -3,7 |
| Beispiel 9 | 0,0 | -2,2 | -3,0 | -3,5 | -3,8 | -4,0 |
| Beispiel 10 | 0,0 | -2,0 | -2,8 | -3,2 | -3,4 | -3,5 |

Um die nutritive Wirksamkeit der erfindungsgemäßen Präparate zu untersuchen, wurden Fütterungsversuche mit je 48 Absetzferkel in Einzelhaltung durchgeführt. Das Futter der vier Versuchsgruppen war isoenergetisch zusammengesetzt, wurde den Tieren zur freien Aufnahme vorgelegt und war folgendermaßen zusammengesetzt:

### Zusammensetzung der verwendeten Futtermittel (%)

| Komponente | Prestarter | Ferkelaufzuchtfutter |
|---|---|---|
| Weizen | 30,7 | 20,2 |
| Mais | 30,0 | 24,3 |
| Gerste | - | 25,0 |
| Sojaextraktionsschrot | 12,7 | 24,0 |
| Magermilchpulver | 14,0 | - |
| Kartoffeleiweißpulver | 5,0 | - |
| Maisstärke | 2,6375 | 2,6375 |
| Sojaöl | 1,752 | 0,45 |
| L-Lysin · HCI | 0,097 | 0,253 |
| DL-Methionin | 0,042 | 0,043 |
| L-Threonin | - | 0,051 |
| Mineralfutter, vit. | 3,1 | 3,1 |

| Nährstoffanalyse (g/kg) | | |
|---|---|---|
| Rohprotein | 205 | 185 |
| ME, MJ/kg | 14,0 | 13,1 |
| Lysin | 12,5 | 11,0 |
| Methionin + Cystein | 7,5 | 6,6 |
| Threonin | 8,5 | 7,3 |
| Tryptophan | 2,5 | 2,2 |
| Calcium | 9,0 | 7,6 |
| Phosphor | 7,0 | 6,6 |
| Natrium | 2,1 | 1,6 |

Es wurde ein Präparat aus Perlit als Träger, Sorbinsäure und Citronensäure als feste Säure und Milch-, Propion- bzw. Ameisensäure als flüssige Säure, hergestellt. Dazu wurde wie in den Beispielen 11, 12 und 13 beschrieben vorgegangen. Die Präparate waren leicht handhabbar und dem Saugferkelfutter (Prestarter) bzw. Ferkelaufzuchtfutter (Starterfutter) gut zuzudosieren.

Bezogen auf den Gehalt an Sorbinsäure wurden Konzentrationen von 0,875 % bzw. 0 % (kein Zusatz) dem gesamten Tierfutter zugegeben. Es sollte gezeigt werden, ob Dosierungen, die noch relativ niedrig sind, aber oberhalb des Bereiches zur Konservierung liegen, schon nutritiv wirksam sind. Überraschender Weise zeigte dieser Zusatz zum Futter in allen Säurekombinationen, bei den Ferkeln eine deutliche Dosis-Wirkungsbeziehung bezogen auf das Wachstum. Zusätze steigerten die Wachstumsraten ausgehend von 547 g /Tag um 11,9 % mehr als Nullversuch (bei Zusatz von Präparat aus Beispiel 11) bzw. 7,4 % (bei Zusatz von Präparat aus Beispiel 12) oder 10,2 % (bei Zusatz von Präparat aus Beispiel 13). Der Futteraufwand/Zuwachs wurde dabei jeweils signifikant (P < 0.05) positiv beeinflusst. Die Ergebnisse dieses Versuches sind in folgender Tabelle zusammengefasst.

Lebendgewichte, tägliche Zunahmen, Futterverzehr und Futterverwertung von Aufzuchtferkeln bei Zusatz von sorbinsäurehaltigem Präparat zum Futter.

| Beispiel Nr. | Kein Zusatz | 11 | 12 | 13 |
|---|---|---|---|---|
| Zusatz, % | 0 | 2,5 | 2,5 | 2,6375 |
| Fütterungsperiode (0-42 Tage) | | | | |
| Zuwachsrate, g/d | 489 | 547 | 525 | 539 |
| | ±70 | ±95 | ±118 | ±82 |
| relativ | 100 | 111,9 | 107,4 | 110,2 |
| | | | | |
| Futterverzehr, g/d | 781 | 831 | 787 | 819 |
| | ±114 | ±149 | ±175 | ±113 |
| relativ | 100 | 106,4 | 100,8 | 104,9 |
| | | | | |
| Futteraufwand | 1,60^{a} | 1,52^{b} | 1,50^{b} | 1,52^{b} |
| je g Zuwachs, g | ±0,06 | ±0,05 | ±0,05 | ±0,04 |
| relativ | 100 | 95,0 | 93,8 | 95,0 |
| ^{a, b} Signifikant unterschiedliche Mittelwerte (p < 0.05) | | | | |

## Patentansprüche

1. Festes Präparat als Tierfutter- oder Futtermittelzusatz, welches 25 bis 45 Gew.-% (bezogen auf das Präparat) Sorbinsäure, mindestens eine bei Raumtemperatur von 23 °C flüssige Säure und mindestens eine weitere bei Raumtemperatur von 23 °C feste, von Sorbinsäure verschiedene organische Säure enthält.

2. Präparat nach Anspruch 1, **dadurch gekennzeichnet, dass** es zusätzlich einen Träger enthält.

3. Präparat nach Anspruch 1 oder 2, **dadurch gekennzeichnet, dass** das Präparat mindestens 80 Gew.-% Säuren enthält.

4. Präparat nach einem oder mehreren der Ansprüche 1 bis 3, **dadurch gekennzeichnet, dass** es 30 bis 40 Gew.-% Sorbinsäure (bezogen auf das Präparat) enthält.

5. Präparat nach einem oder mehreren der Ansprüche 1 bis 4, **dadurch gekennzeichnet, dass** es >0 bis 40 Gew.-% (bezogen auf das Präparat) flüssige Säuren enthält.

6. Präparat nach Anspruch 5, **dadurch gekennzeichnet, dass** die flüssige Säure ausgewählt wird aus einer oder mehreren der folgenden Säuren: Propion-, Essig-, Milch-, Valerian-, Ameisen-, Isobutter-, Trimethylessig-, 2-Methylbutter-, Hexan-, Butter-, Phosphor-, Salz- und Schwefelsäure.

7. Präparat nach einem oder mehreren der Ansprüche 1 bis 6, **dadurch gekennzeichnet, dass** es >0 bis 50 Gew.-% (bezogen auf das Präparat) feste organische Säuren enthält.

8. Präparat nach Anspruch 7, **dadurch gekennzeichnet, dass** die feste organische Säure ausgewählt wird aus einer oder mehreren der folgenden Säuren: Fumar-, Wein-, Äpfel-, Bernstein-, Adipin-, Ascorbin-, Glucon-, Citronen- und Aminosäuren.

9. Präparat nach einem oder mehreren der Ansprüche 2 bis 8, **dadurch gekennzeichnet, dass** es maximal 20 % eines Trägers enthält.

10. Präparat nach einem oder mehreren der Ansprüche 2 bis 9, **dadurch gekennzeichnet, dass** der Träger Perlit (Perlstein, E 599) ist.

11. Futtermittel, **dadurch gekennzeichnet, dass** es ein Präparat nach Anspruch 1 enthält.

12. Futtermittelzusatz, **dadurch gekennzeichnet, dass** er ein Präparat nach Anspruch 1 enthält.

13. Leistungsförderer, **dadurch gekennzeichnet, dass** er ein Präparat nach Anspruch 1 enthält.

14. Futtermittel nach Anspruch 11, **dadurch gekennzeichnet, dass** es 0,125 bis 7,5 Gew.-% (bezogen auf das Futtermittel) des Präparates enthält.

15. Verwendung des Präparates nach Anspruch 1 als Tierfutter- oder Futtermittelzusatz.

16. Verwendung nach Anspruch 15 in der Schweineaufzucht.

17. Verwendung nach Anspruch 15 in der Kälberaufzucht.

18. Verwendung nach Anspruch 15 in der Lämmeraufzucht.

## Claims

1. A solid preparation of animal feed additive or feed additive which comprises 25 to 45% by weight of sorbic acid (based on the preparation), at least one acid which is liquid at a room temperature of 23°C and at least one other organic acid, different from sorbic acid, which is solid at a room temperature of 23°C.

2. The preparation as claimed in claim 1, wherein it additionally comprises a carrier.

3. The preparation as claimed in claim 1 or 2, wherein the preparation comprises at least 80% by weight of acids.

4. The preparation as claimed in one or more of claims 1 to 3, wherein it comprises 30 to 40% by weight of sorbic acid (based on the preparation).

5. The preparation as claimed in one or more of claims 1 to 4, wherein it comprises >0 to 40% by weight (based on the preparation) of liquid acids.

6. The preparation as claimed in claim 5, wherein the liquid acid is selected from one or more of the following acids: propionic, acetic, lactic, valeric, formic, isobutyric, trimethylacetic, 2-methylbutyric, hexanoic, butyric, phosphoric, hydrochloric and sulfuric acid.

7. The preparation as claimed in one or more of claims 1 to 6, wherein it comprises >0 to 50% by weight (based on the preparation) of solid organic acids.

8. The preparation as claimed in claim 7, wherein the solid organic acid is selected from one or more of the following acids: fumaric, tartaric acid, malic, succinic, adipic, ascorbic, gluconic, citric and amino acids.

9. The preparation as claimed in one or more of claims 2 to 8, wherein it comprises a maximum of 20% of carrier.

10. The preparation as claimed in one or more of claims 2 to 9, wherein the carrier is perlite (Perlstein, E 599).

11. A feed which comprises a preparation as claimed in claim 1.

12. A feed additive which comprises a preparation as claimed in claim 1.

13. A growth promotor which comprises a preparation as claimed in claim 1.

14. The feed as claimed in claim 11, wherein it comprises 0.125 to 7.5% by weight (based on the feed) of the preparation.

15. The use of the preparation as claimed in claim 1 as animal feed additive or feed additive.

16. The use as claimed in claim 15 in pig husbandry.

17. The use as claimed in claim 15 in calf husbandry.

18. The use as claimed in claim 15 in lamb husbandry.

## Revendications

1. Préparation solide à titre d'additif pour aliment pour animaux ou pour aliment, qui contient de 25 à 45% en masse (sur la base de la préparation) d'acide sorbique, au moins un acide liquide à température ambiante de 23°C, et au moins un autre acide organique, différent de l'acide sorbique, solide à une température ambiante de 23°C.

2. Préparation selon la revendication 1, **caractérisée en ce qu'**elle contient en outre un support.

3. Préparation selon la revendication 1 ou 2, **caractérisée en ce que** la préparation contient au moins 80% en masse d'acides.

4. Préparation selon l'une quelconque des revendications 1 à 3, **caractérisée en ce qu'**elle contient de 30 à 40% en masse d'acide sorbique (sur la base de la préparation).

5. Préparation selon l'une quelconque des revendications 1 à 4, **caractérisée en ce qu'**elle contient, plus de 0 et jusqu'à 40% en masse (sur la base de la préparation), d'acides liquides.

6. Préparation selon la revendication 5, **caractérisée en ce que** l'acide liquide est choisi parmi un ou plusieurs des acides suivants : l'acide propionique, l'acide acétique, l'acide lactique, l'acide valérique, l'acide formique, l'acide isobutyrique, l'acide triméthylacétique, l'acide 2-méthylbutyrique, l'acide hexanoïque, l'acide butyrique, l'acide phosphorique, l'acide chlorhydrique et l'acide sulfurique.

7. Préparation selon l'une quelconque des revendications 1 à 6, **caractérisée en ce qu'**elle contient, plus de 0 et jusqu'à 50% en masse (sur la base de la préparation), d'acides organiques solides.

8. Préparation selon la revendication 7, **caractérisée en ce que** l'acide organique solide est choisi parmi un ou plusieurs des acides suivants : l'acide fumarique, l'acide tartrique, l'acide malique, l'acide succinique, l'acide adipique, l'acide ascorbique, l'acide gluconique, l'acide citrique, et les acides aminés.

9. Préparation selon l'une quelconque des revendications 2 à 8, **caractérisée en ce qu'**elle contient au maximum 20% d'un support.

10. Préparation selon l'une quelconque des revendications 2 à 9, **caractérisée en ce que** le support est de la Perlite (Perlstein, E 599).

11. Aliment, **caractérisé en ce qu'**il contient une préparation selon la revendication 1.

12. Additif alimentaire, **caractérisé en ce qu'**il contient une préparation selon la revendication 1.

13. Promoteur de performance alimentaire, **caractérisé en ce qu'**il contient une préparation selon la revendication 1.

14. Aliment selon la revendication 11, **caractérisé en ce qu'**il contient de 0,125 à 7,5% en masse (sur la base de l'aliment) de la préparation.

15. Utilisation de la préparation selon la revendication 1, à titre d'additif pour un aliment pour animaux, ou pour un aliment.

16. Utilisation selon la revendication 15 dans l'élevage des porcs.

17. Utilisation selon la revendication 15 dans l'élevage des veaux.

18. Utilisation selon la revendication 15 dans l'élevage des agneaux.
